# EUROPEAN PATENT APPLICATION

(11) **EP 4 716 061 A1**
(43) Date of publication of application: **25.03.2026**
(21) Application number: 25202746.1
(22) Date of filing: 17.09.2025
(51) Int. Cl.: H02J 7/70, H02J 50/00

(54) **ELECTRONIC DEVICE, CONTACTLESS CHARGING SYSTEM, AND PET ROBOT**

(30) Priority: 24.09.2024 JP 2024165721
(71) Applicant: Casio Computer Co., Ltd., Tokyo 151-8543 (JP)
(72) Inventor: Miura, Kohei, Hamura-shi, Tokyo, 205-8555 (JP)
(74) Representative: Grünecker Patent- und Rechtsanwälte PartG mbB

(57) **Abstract**

An electronic device includes a power reception coil unit (295) for contactless charging, a coil retainer (266) to retain the power reception coil unit (295), and a casing (206) to accommodate the power reception coil unit (295) and the coil retainer (266). The casing (206) has an opening (282). The coil retainer (266) retains the power reception coil unit (295) while allowing the power reception coil unit (295) to be exposed through the opening (282), and reinforces the opening (282) by being fixed to or abutting on a peripheral edge of the opening (282) in the casing (206).

## Description

This application relates to an electronic device, a contactless charging system, and a pet robot.

Unexamined Japanese Patent Application Publication No. 2017-77174 discloses a technique to maintain power transmission efficiency in contactless charging by preventing misalignment between the coil of an electronic device and the coil of a charging device in contactless charging. In detail, the technique involves applying a magnet at the center of at least one of the coils, and providing the charging device and the electronic device with protrusions and recesses engageable with each other.

The coil provided with a magnet at the center, however, inevitably requires a larger diameter to encircle the magnet, which increases the size of the electronic device. The engageable protrusions and recesses provided to the charging device and the electronic device also increase the size of the electronic device.

An objective of the present disclosure, which has been accomplished to mitigate and solve the above problem, is to provide an electronic device, a contactless charging system, and a pet robot that can achieve improved power transmission efficiency in contactless charging, while maintaining the compact size of the electronic device.

In order to achieve the above objective, an electronic device according to an aspect of the present disclosure includes: a power reception coil unit for contactless charging, a coil retainer to retain the power reception coil unit, and a casing to accommodate the power reception coil unit and the coil retainer. The casing has an opening. The coil retainer retains the power reception coil unit while allowing the power reception coil unit to be exposed through the opening, and reinforces the opening by being fixed to or abutting on a peripheral edge of the opening in the casing.

A more complete understanding of this application can be obtained when the following detailed description is considered in conjunction with the following drawings, in which:
FIG. 1 illustrates an appearance of a robot according to an embodiment;
FIG. 2 is a schematic sectional view of the robot according to the embodiment when viewed from the left side;
FIG. 3 is a perspective view of a housing according to the embodiment;
FIG. 4 is a sectional view of the housing taken along the line IV-IV of FIG. 3;
FIG. 5 is an exploded perspective view of a first casing of a body of a housing flipped vertically from that illustrated in FIG. 3;
FIG. 6 is a perspective view of a second casing flipped vertically from that illustrated in FIG. 5;
FIG. 7 is a perspective view of the second casing illustrated in FIG. 6 from which components including a coil retainer fixed to the peripheral edges of an opening are removed;
FIG. 8 is a perspective view of the second casing according to the embodiment;
FIG. 9 is an exploded perspective view of the components including the coil retainer removed from the second casing illustrated in FIG. 7;
FIG. 10A is a perspective view of the coil retainer according to the embodiment;
FIG. 10B is another perspective view of the coil retainer according to the embodiment;
FIG. 11 is a perspective view of a power reception coil and a power reception substrate flipped vertically from those illustrated in FIG. 9;
FIG. 12 is a sectional view of the housing taken along the line XII-XII of FIG. 3;
FIG. 13 is a perspective view of a contactless charging unit according to the embodiment; and
FIG. 14 is a sectional view of the contactless charging unit taken along the line XIV-XIV of FIG. 13.

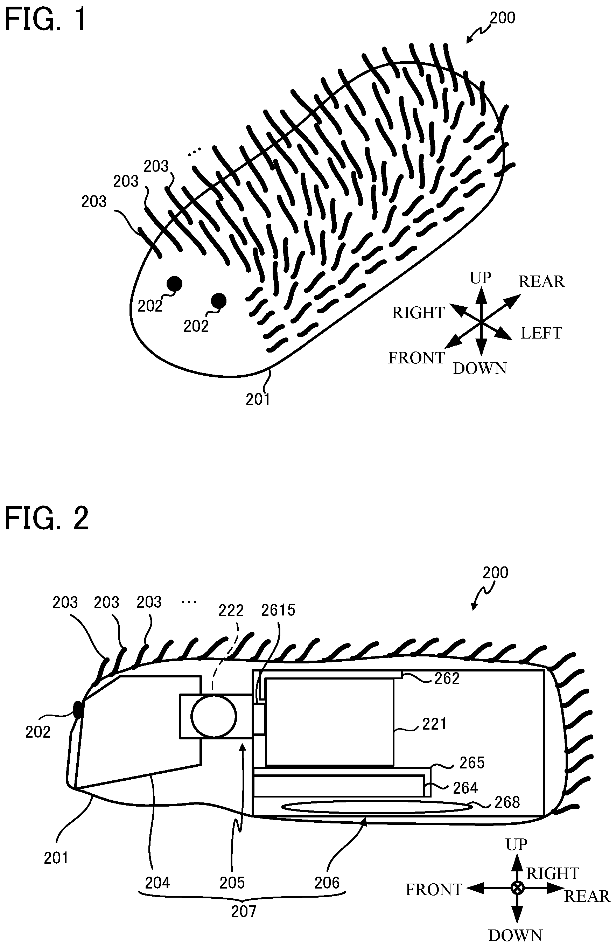

The following describes an embodiment of the present disclosure with reference to the accompanying drawings. In these drawings, the components identical or corresponding to each other are provided with the same reference symbol. A robot 200 according to the embodiment is a pet robot that imitates a small animal. The robot 200 is powered by a contactlessly rechargeable battery to swing its head. As illustrated in FIG. 1, for example, the robot 200 includes an outer cover 201 having decorative members 202 that imitate eyes, and hairs 203. As illustrated in FIG. 2, the robot 200 includes a housing 207. The housing 207 is covered with the outer cover 201 and accommodated inside the outer cover 201. The housing 207 is an electronic device including a head 204, a joint 205, and a body (casing) 206. The joint 205 links the head 204 to the body 206.

The following assumes the robot 200 normally placed on a horizontal floor, and defines that the part corresponding to the face of the robot 200 (that is, the part of the head 204 opposite to the body 206) is oriented frontward, and the part corresponding to the tail of the robot 200 (that is, the part of the body 206 opposite to the head 204) is oriented rearward. The description also defines that the part of the robot 200 in contact with the horizontal floor on which the robot 200 is placed is oriented downward, and the opposite part is oriented upward. The description further defines, as the left-right direction, the direction orthogonal to both the front-rear and up-down directions of the robot 200.

The outer cover 201 is an example of an outer covering member. The outer cover 201 is elongated in the front-rear direction, and has a pouched shape capable of accommodating the housing 207 therein. The outer cover 201 has a waistless shape from the head 204 to the body 206, and completely encloses the body 206 and the head 204. The outer cover 201 having such a shape causes the robot 200 to replicate a prone animal. The external surface of the outer cover 201 is made of an artificial pile fabric that imitates hairs 203 of a small animal, so as to replicate the texture of fur of the small animal. The internal surface of the outer cover 201 is made of a flexible material, such as leather, resin, or rubber. This flexible material allows the outer cover 201 to follow the movement of the housing 207. Specifically, the outer cover 201 follows the turning movement of the head 204 relative to the body 206.

As illustrated in FIG. 2, the body 206 extends in the front-rear direction. The body 206 is in contact via the outer cover 201 with the surface, such as floor or table, on which the robot 200 is placed. The body 206 includes a roll motor 221 at the front end. The front end of the body 206 is coupled to the head 204 via the joint 205. The joint 205 includes a pitch motor 222. The roll motor 221, which is included in the body 206 in FIG. 2, may also be included in the joint 205 or the head 204. The head 204 is coupled to the body 206 such that the head 204 is rotatable about the left-right and front-rear directions of the robot 200.

The joint 205 couples the head 204 to the body 206, such that the head 204 is rotatable about a first rotational axis extending through the joint 205 in the front-rear direction of the body 206. The roll motor 221 is a servo motor to cause the head 204 to normally turn in the clockwise (rightward turning) direction or reversely turn in the counterclockwise (leftward turning) direction, about the first rotational axis relative to the body 206. The joint 205 also couples the head 204 to the body 206, such that the head 204 is rotatable about a second rotational axis extending through the joint 205 in the left-right direction of the body 206. The pitch motor 222 is a servo motor to cause the head 204 to normally turn in the upward direction or reversely turn in the downward direction about the second rotational axis.

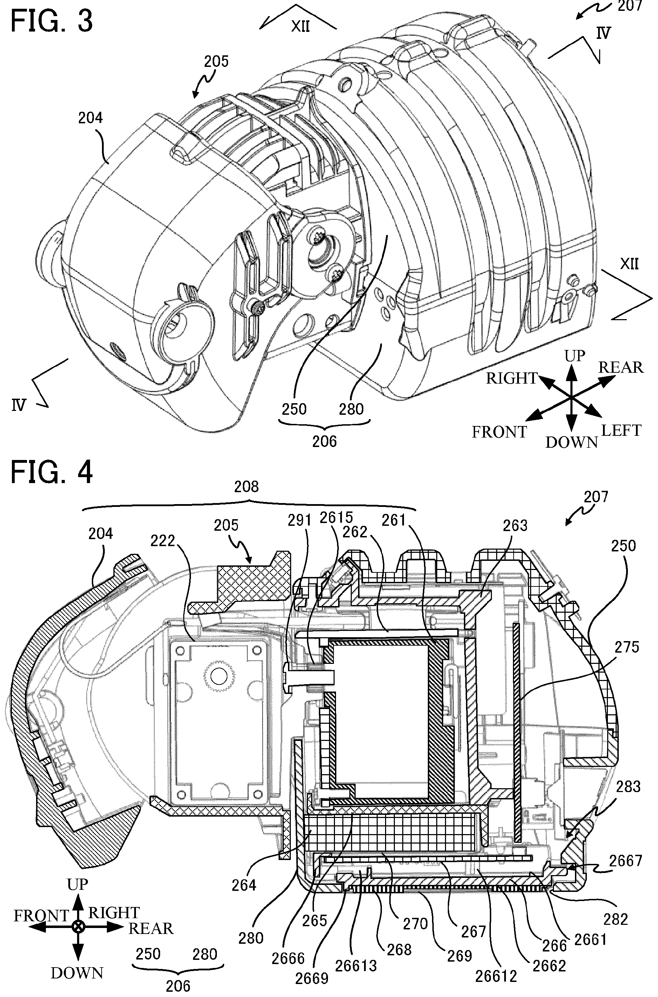

As illustrated in FIGS. 3 and 4, the body 206 is a hollow cylindrical casing made of an acrylonitrile butadiene styrene (ABS) resin, for example. The body 206 includes a first casing 250 that constitutes the dorsal part of the body 206 of the robot 200, and a second casing 280 that constitutes the abdominal part of the body 206. The body 206 accommodates the roll motor 221, a secondary battery 264, a battery retainer 265, a coil retainer 266, and a power reception coil 268, for example.

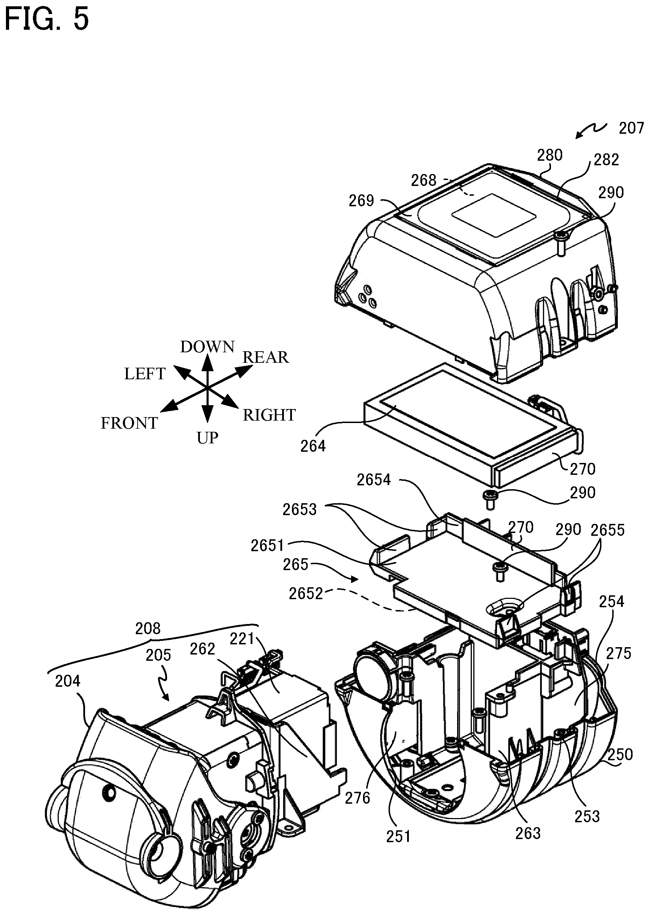

As illustrated in FIGS. 4 and 5, the first casing 250 accommodates the roll motor 221 that drives the head 204, a movement unit stabilizer 262 that stabilizes the joint 205 to the body 206, a substrate base 263 provided with substrates, such as a primary substrate 275, the secondary battery 264 that feeds electric power to the robot 200, the battery retainer 265 that retains the secondary battery 264, the primary substrate 275 that controls the robot 200, and a programmable system-on-chip (PSoC) substrate 276. The first casing 250 forms the upper half of the outer shell of the body 206. As illustrated in FIG. 5, the first casing 250 has a motor shaft opening 251 on the front to allow the rotational shaft of the roll motor 221 to extend into the joint 205. The first casing 250 has screw holes 253 and an engaged edge 254 that serve to integrate the first casing 250 and the second casing 280.

The roll motor 221 functions as a movement unit 208, along with the head 204, the joint 205, the pitch motor 222 inside the joint 205, and the movement unit stabilizer 262, which is described below. The movement unit 208 enables the movement of the robot 200. The movement unit 208 is a consumable component to be replaced with a new movement unit 208 after use for a certain period. The movement unit stabilizer 262 stabilizes the movement unit 208 with fasteners 290, such as screws, at an upper front position of the first casing 250 of the body 206. The movement unit stabilizer 262 also accommodates the roll motor 221. The substrate base 263 is provided with the primary substrate 275 in the rear part, and is provided with the PSoC substrate 276 in the left part.

The secondary battery 264 that feeds electric power to the robot 200 can be recharged contactlessly. The secondary battery 264 is disposed at the position closest to an opening 282 among the components accommodated in the first casing 250. The secondary battery 264 is provided with impact buffers 270 to protect the sites of protection circuit boards inside the battery. The battery retainer 265 has a lower main surface 2651 and peripheral walls 2653, 2654, and 2655 that support the secondary battery 264, and thus protects the secondary battery 264 from vibrations and shocks in cooperation with the impact buffers 270, for example. The battery retainer 265 has an upper main surface 2652 fixed to the lower end of the substrate base 263 with fasteners 290, such as screws. The rear peripheral wall 2654 extending downward from the lower main surface 2651, among the peripheral walls 2653, 2654, and 2655, is provided with an impact buffer 270 for preventing contamination of foreign objects between the rear peripheral wall 2654 and the secondary battery 264.

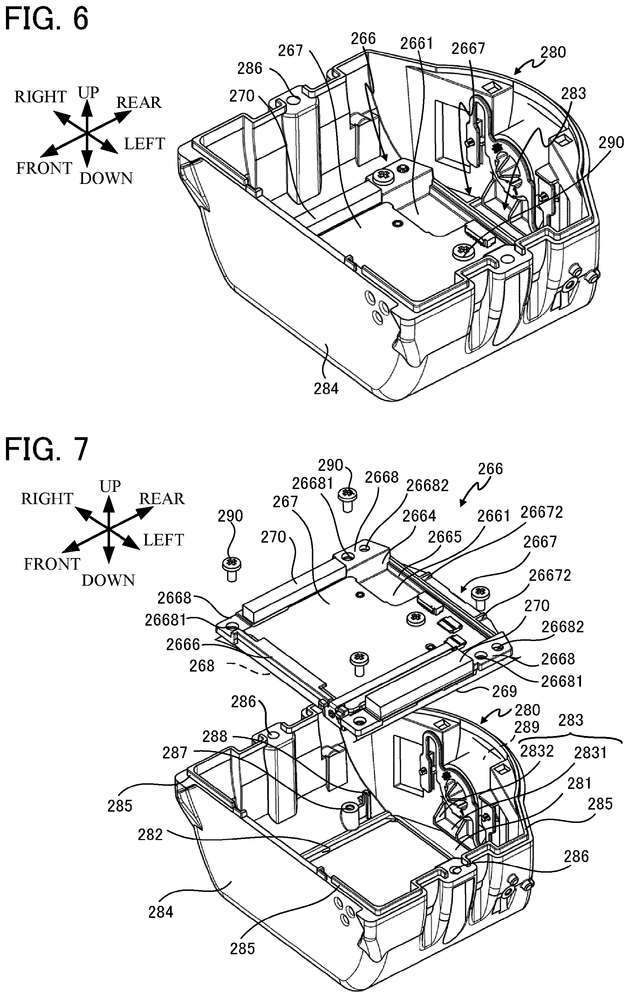

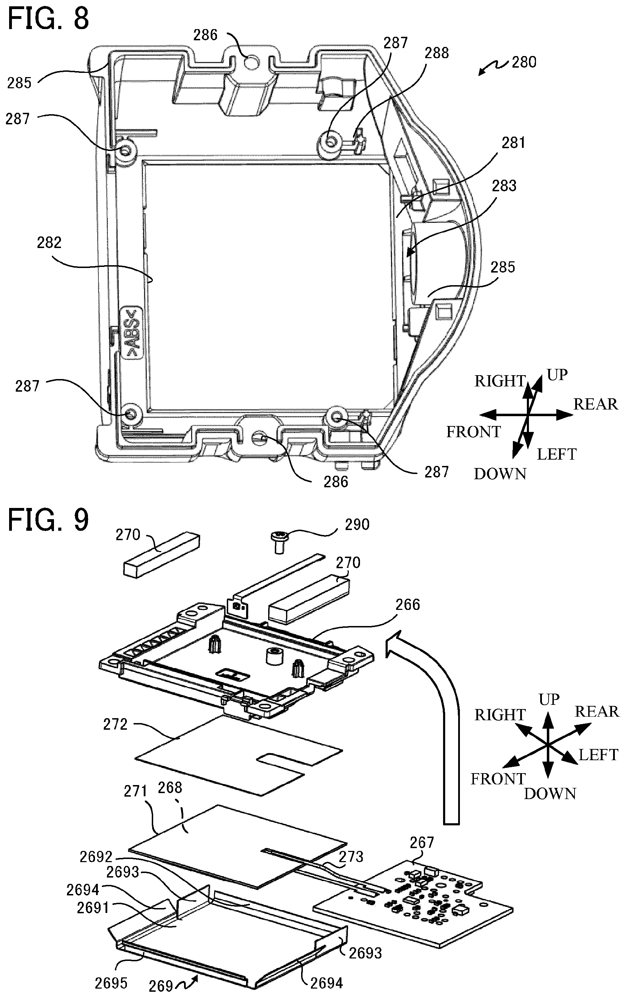

As illustrated in FIGS. 5, 6, and 7, the second casing 280 accommodates the coil retainer 266 to retain the power reception coil 268, a power reception substrate 267 that feeds the robot 200 with the electric power received by the power reception coil 268, the power reception coil 268 to be wirelessly connected to a power transmission coil 310 of a charging device 300, which is described below, and a coil tape 269 that protects the power reception coil 268. The second casing 280 forms the lower half of the outer shell of the body 206. The second casing 280 has a bottom 281 (at the position farthest from the first casing 250) having the rectangular opening 282. As illustrated in FIG. 4, the peripheral edges of the opening 282 surround the power reception coil 268 along the outer periphery of the second casing 280. As illustrated in FIGS. 6, 7, and 8, the second casing 280 has a coil retainer restrictor 283 therein at a lower back position. The coil retainer restrictor 283 comes into contact with a protrusion 2667 of the coil retainer 266 when the coil retainer 266 experiences a strong upward force. The coil retainer restrictor 283 has a parallel segment 2831 parallel to the main surfaces of the coil retainer 266, and vertical segments 2832 vertical to the main surfaces and serving as reinforcing ribs for the parallel segment 2831. The coil retainer 266 is fixed to the peripheral edges of the opening 282 by fastening fasteners 290, such as screws, to four screw holes 287 and four screw holes 26681 of the coil retainer 266. The second casing 280 has a body front 284 positioned adjacent to the joint 205 with a slight gap therebetween. The second casing 280 has a left screw hole 286 and a right screw hole 286 at the upper end. Inserting and fastening fasteners 290, such as screws, from the screw holes 286 to the screw holes 253 of the first casing 250 causes the first casing 250 and the second casing 280 to be fixed to and integrated with each other.

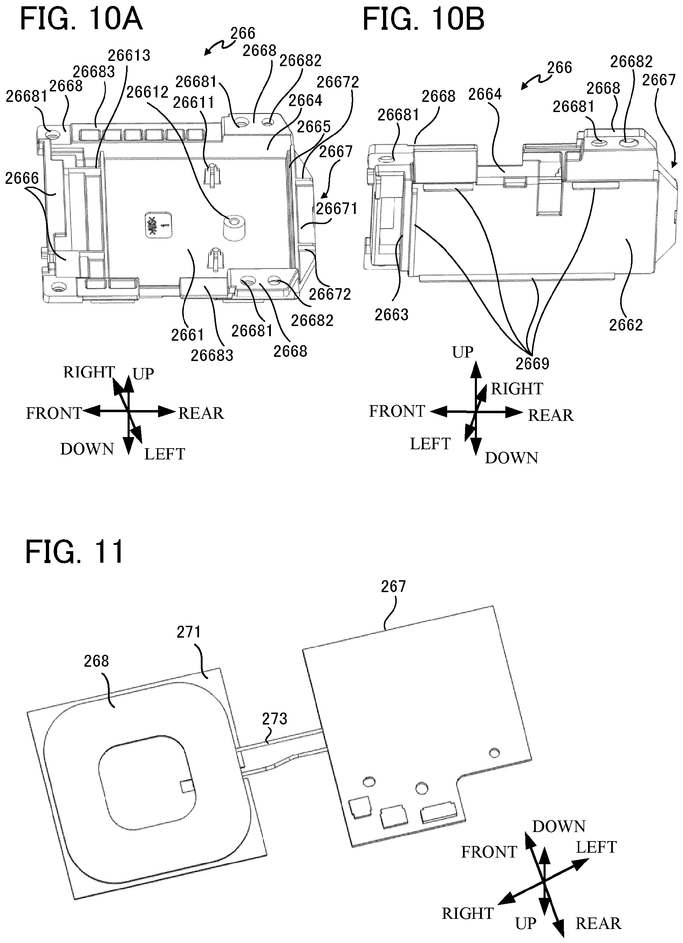

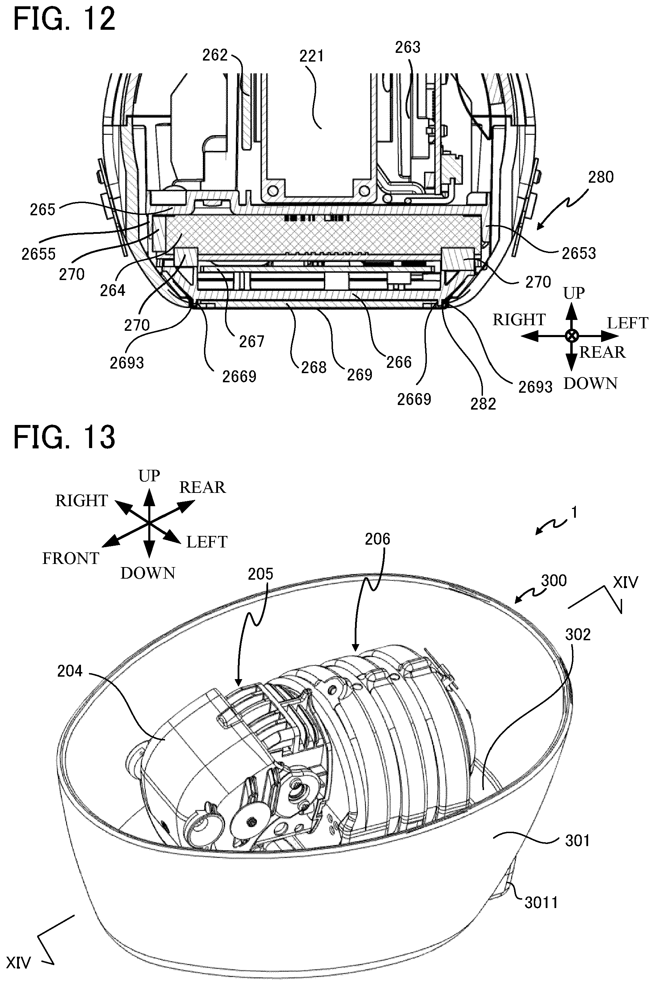

As illustrated in FIGS. 4, 7, and 9, the coil retainer 266 has an upper main surface 2661 provided with the power reception substrate 267 with a gap therebetween. The coil retainer 266 has a lower main surface 2662 provided via a double-sided tape 272 with the power reception coil 268 stacked on a ferrite 271 (on the lower surface). As illustrated in FIGS. 4, 9, 10A, and 10B, the coil retainer 266 has upright segments 2663, 2664, 2664, and 2665 extending vertically from the upper main surface 2661. The coil retainer 266 retains the power reception substrate 267 by allowing the power reception substrate 267 to be mounted on placement projections 26611 and a flanged screw hole 26612 such that the circuit components of the power reception substrate 267 face the upper main surface 2661, allowing the front end of the power reception substrate 267 to be engaged with folded edge 2666, and allowing a single fastener 290, such as a screw, to be fastened. The coil retainer 266 thus retains the power reception substrate 267 while accommodating the power reception substrate 267 therein. The coil retainer 266 has the protrusion 2667 that can come into contact with the coil retainer restrictor 283 of the second casing 280. The protrusion 2667 has a flat segment 26671 that comes into contact with the parallel segment 2831 to prevent deformation of the coil retainer 266 when the power reception coil 268 or the coil retainer 266 is pressed upward or experiences a load, and wall segments 26672 serving as reinforcing ribs that strengthens the flat segment 26671. Under normal conditions, the flat segment 26671 is opposed to the parallel segment 2831, with a space therebetween and no direct contact. The coil retainer 266 also has tabs 2669 fitted in the opening 282 of the second casing 280. The coil retainer 266 further has placement surfaces 26683 provided with the impact buffers 270. The coil retainer 266 is thus located below the secondary battery 264 so as to face the secondary battery 264 via the impact buffers 270 at the left and right ends, and supports the secondary battery 264 via the impact buffers 270. The impact buffers 270 are disposed at the positions farthest from the opening 282 among the components accommodated in the second casing 280. The coil retainer 266 has a rectangular flat-plate shape, with all four sides surrounded by the upright segments strengthen by reinforcing ribs 26613, and thus ensures high strength despite of an internal hollow space for retaining the power reception substrate 267. As illustrated in FIGS. 4, 5, and 9, the coil tape 269 is disposed over the power reception coil 268 illustrated in FIG. 11, and closes the opening 282. The coil tape 269 has bent ends 2692, 2693, 2694, and 2695, and is tightly held between the peripheral edges of the opening 282 and the coil retainer 266, as illustrated in FIG. 12.

The robot 200 further includes components, such as various sensors, controllers, and storages, which have been widely known as disclosed in Unexamined Japanese Patent Application Publication No. 2024-104908, for example, although a detailed description of these components is not provided herein.

The following describes features, such as positional relationships among the components disposed inside the body 206. As illustrated in FIG. 4, the first casing 250 of the body 206 is provided with, in the order from the top to the bottom, the substrate base 263, the movement unit stabilizer 262, the roll motor 221, the battery retainer 265, and the secondary battery 264. The second casing 280 is provided with, in the order from the top to the bottom, the power reception substrate 267, the coil retainer 266, the power reception coil 268, and the coil tape 269. In more detail, the secondary battery 264 is disposed at the position closest to the opening 282 among the components accommodated in the first casing 250, whereas the impact buffers 270 mounted on the coil retainer 266 are disposed at the positions farthest from the opening 282 among the components accommodated in the second casing 280. The secondary battery 264 is supported by the impact buffers 270 mounted on the coil retainer 266. The secondary battery 264 is thus located at such a position in the first casing 250 as to be replaced immediately after separation of the first casing 250 and the second casing 280. This structure allows a user to extract the secondary battery 264 immediately after flipping the body 206 vertically and detaching the second casing 280. The secondary battery 264 is protected by the battery retainer 265 from the top and left sides, by the second casing 280 from the front side, and by the impact buffers 270 from the other sides (as illustrated in FIG. 12, for example). This protection of the secondary battery 264 improves the safety of the robot 200. The coil retainer 266 has insertable projections 288 introduced in two insertion holes 26682 of the second casing 280 to prevent the coil retainer 266 from being displaced in the front-rear and left-right directions, and has the four screw holes 26681 and 287 fixed to the peripheral edges of the opening 282 with the fasteners 290 to prevent the coil retainer 266 from being displaced in the up-down, front-rear, and left-right directions. This structure enhances the integration between the second casing 280 and the coil retainer 266 while also strengthening the second casing 280. The power reception coil 268, the coil tape 269, and the ferrite 271 are components of a power reception coil unit 295 that receives electric power in contactless charging. The power reception coil unit 295 may lack a coil tape or ferrite, and may consist only of the power reception coil 268. The coil retainer 266 may be fixed to the second casing 280 not with screws but by adhesion of the edges of the coil retainer 266.

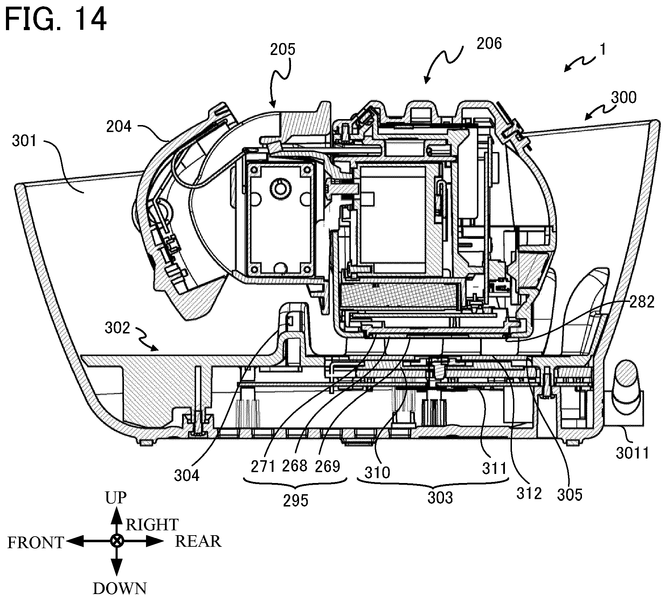

The robot 200 according to the embodiment has the above-described configuration. The following describes a configuration of the charging device 300 according to the embodiment. FIGS. 13 and 14 intended to describe the charging device 300 do not illustrate the outer cover 201, in order to ensure the visibility of the figures. As illustrated in FIGS. 13 and 14, the charging device 300 has a bowl shape, and includes an outer cage 301, an inner bottom 302, and a power transmitter 303. The outer cage 301 defines the outer circumference of the charging device 300, and is made of an insulating member, such as plastic, for example. The outer cage 301 has a connector 3011 coupled to an AC adaptor, which is not illustrated, to be connected to an electric outlet. The inner bottom 302 receives the body 206 of the robot 200 placed thereon, and is designed to be parallel to the power reception coil 268 included in the body 206 of the robot 200 placed on the inner bottom 302. The inner bottom 302 has an alignment wall 304 and a power transmission opening 305 for alignment of the position of the body 206 of the robot 200. The power transmitter 303 converts DC current fed from the AC adaptor into AC current, and feeds electric power to the robot 200 via a power transmission substrate 311, from the power transmission coil 310 disposed along the inner bottom 302 within the power transmission opening 305 (that is, from a power transmission coil unit exposed through the power transmission opening 305). The charging device 300 is provided with a coil tape 312 that covers the power transmission opening 305. The power transmission coil 310 and the coil tape 312 are components of a power transmission coil unit that transmits electric power in contactless charging. The power transmission coil unit may lack a coil tape, and may consist only of the power transmission coil 310.

The charging device 300 according to the embodiment has the above-described configuration. The following describes a method of replacing the secondary battery 264 of the robot 200. First, the user unzips the fastener, which is not illustrated, on the outer cover 201 of the robot 200, and extracts the housing 207. The user then flips the housing 207 vertically, and detaches the second casing 280 from the housing 207. The housing 207 after removal of the second casing 280 accommodates the secondary battery 264 such that the secondary battery 264 can be readily extracted from the first casing 250. The user then replaces the exhausted (or broken) secondary battery 264 with a new secondary battery 264. The user then reattaches the second casing 280, restores the housing 207 in the outer cover 201, and zips the fastener, thereby readily completing the battery replacement.

As described above, the robot 200 according to the embodiment has the opening 282 in the second casing 280. This opening 282 enables the power reception coil 268 to be located closer to the power transmission coil 310 while maintaining the shape of the body 206 as much as possible, and shortens the distance between the power reception coil 268 and the power transmission coil 310, leading to improved power transmission efficiency in contactless charging. The coil retainer 266 retains the power reception coil 268 at the position along the outer periphery of the second casing 280 within the opening 282 (that is, the coil retainer 266 retains the power reception coil unit while allowing the power reception coil unit to be exposed through the opening 282, and is fixed to the body 206 at multiple sites along the peripheral edges of the opening 282). This structure allows the power reception coil 268 to be disposed while ensuring the flexibility of arrangement of the other electronic components inside the second casing 280. The structure also enables the power reception coil 268 to be located closer to the power transmission coil 310 of the charging device 300 in contactless charging. The robot 200 can thus achieve improved power transmission efficiency in contactless charging while maintaining the compact size of the electronic device. Prior to contactless charging, the user holds the abdominal part of the robot 200 with finger tips and recognizes the position of the power reception coil 268 by touch, and can thereby more accurately place the power reception coil 268 above the power transmission coil 310 of the charging device 300. In addition, the coil retainer 266 covers and reinforces the opening 282 inside the second casing 280, preventing any reduction in the strength due to the presence of the opening 282. The coil retainer 266 has the protrusion 2667 to come into contact with the coil retainer restrictor 283 provided at one of the peripheral edges of the opening 282 of the second casing 280 when experiencing a large upward force, and can thus be prevented from deformation. The coil retainer 266 also has the tabs 2669 fitted in the opening 282 of the second casing 280, and can thus prevent any reduction in the strength due to the presence of the opening 282. Furthermore, the power reception coil 268 is disposed within the opening 282 and has a thickness smaller than the outer wall of the second casing 280, and thus contributes to space conservation. The power reception substrate 267 retained inside the coil retainer 266 also contributes to space conservation. This structure enables easy alignment of the power reception coil 268 for contactless charging, while maintaining the compact size of the housing 207. In addition, the second casing 280 can be detached from the housing 207, such that the second casing 280 is accompanied by the components, such as the power reception coil 268, the power reception substrate 267, and the coil retainer 266, located below the secondary battery 264, and the secondary battery 264 is disposed at the lowest position in the first casing 250. This structure allows the user to replace the secondary battery 264 immediately after flipping the housing 207 vertically and detaching the second casing 280, thereby enhancing ease of maintenance.

The above-described embodiment of the present disclosure is a mere example and not to be construed as limiting the application scope of the present disclosure. That is, the embodiment of the present disclosure may be provided with various modifications, and any modified embodiment can be encompassed in the scope of the present disclosure. For example, although the robot 200 is a pet robot in the above-described embodiment, the robot may also be an electronic device, such as cleaning robot or serving robot, driven by a secondary battery and excluding an outer cover that imitates a small animal like the outer cover 201, for example.

Although the body 206 includes the first casing 250 and the second casing 280 in the above-described embodiment, the body may also include a single casing having a detachable segment corresponding to the bottom 281, for example. Alternatively, the body may include a single casing having an openable and closable door that enables readily replacement of a component, such as secondary battery or motor unit, for example.

Although the outer cover 201 has the hairs 203 in the above-described embodiment, the outer cover may have feathers instead of the hairs, or may imitate skins of reptiles, for example.

Although the head 204 is movable in the above-described embodiment, the robot may include a movable tail instead of the movable head, or may include both the movable head and tail. Alternatively, the robot may include movable arms and legs instead of the movable head, for example.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. An electronic device, comprising:
a power reception coil unit (295) for contactless charging;
a coil retainer (266) to retain the power reception coil unit (295); and
a casing (206) to accommodate the power reception coil unit (295) and the coil retainer (266), wherein
the casing (206) has an opening (282), and
the coil retainer (266)
retains the power reception coil unit (295) while allowing the power reception coil unit (295) to be exposed through the opening (282), and
reinforces the opening (282) by being fixed to or abutting on a peripheral edge of the opening (282) in the casing (206).

2. The electronic device according to claim 1, wherein the coil retainer (266) is fixed to the casing (206) with screws at a plurality of sites along the peripheral edge.

3. The electronic device according to claim 1 or 2, wherein
the power reception coil unit (295) includes
a power reception coil (268) for contactless charging, and
a power reception substrate (267) connected to the power reception coil (268).

4. The electronic device according to claim 3, wherein
the coil retainer (266) has
a main surface to retain the power reception coil (268), and
an opposite main surface provided with the power reception substrate (267).

5. The electronic device according to claim 3 or 4, further comprising:
a secondary battery (264) to be charged with electric power received by the power reception coil (268).

6. The electronic device according to claim 5, wherein
the casing (206) includes
a first casing (250) provided with the secondary battery (264), and
a second casing (280) having the opening (282), and
the first casing (250) and the second casing (280) are fixed to each other with attachable and detachable fasteners (290).

7. The electronic device according to claim 4, wherein the coil retainer (266) includes
a protrusion (2667) to come into contact with a coil retainer restrictor (283) provided to the casing (206), and
tabs (2669) to be fitted in the opening (282).

8. The electronic device according to claim 6, wherein
the secondary battery (264) is disposed at a position closest to the opening (282) among components accommodated in the first casing (250),
the coil retainer (266) is provided with an impact buffer (270) to support the secondary battery (264), and
the impact buffer (270) is disposed at a position farthest from the opening (282) among components accommodated in the second casing (280).

9. A contactless charging system, comprising:
the electronic device according to any one of claims 1 to 8; and
a charging device including a power transmission coil unit (310, 312) to contactlessly transmit electric power to the electronic device placed on an inner bottom (302) of the charging device (300), wherein
the inner bottom (302) has a power transmission opening (305), and
the power transmission coil unit (310, 312) is exposed through the power transmission opening (305).

10. A pet robot, comprising:
the electronic device according to any one of claims 1 to 8, and
an outer cover (201) that imitates a small animal, wherein
the electronic device is
accommodated in the outer cover (201), and
contactlessly recharged when a portion of the outer cover (201) corresponding to an abdominal part of the small animal is in contact with an inner bottom (302) of a bowl-shaped charging device (300).
